# EUROPEAN PATENT APPLICATION

(11) **EP 3 900 949 A1**
(43) Date of publication of application: **27.10.2021**
(21) Application number: 19898922.0
(22) Date of filing: 13.12.2019
(51) Int. Cl.: B60C 1/00, B60C 9/18, B60C 17/00

(54) **RUN-FLAT TIRE**

(30) Priority: 19.12.2018 JP 2018237670
(71) Applicant: BRIDGESTONE CORPORATION, Chuo-ku Tokyo 104-8340 (JP)
(72) Inventor: HASEGAWA, Keiichi, Tokyo 104-8340 (JP)
(74) Representative: Oxley, Robin John George
(86) International application number: PCT/JP2019/048955
(87) International publication number: WO 2020/129847

(57) **Abstract**

A run-flat tire (10) includes a side reinforcing rubber (70) provided in a tire side portion (30). The run-flat tire (10) is formed of a resin material, has a prescribed width in the tire width direction, and is provided with a reinforcing ring portion (80) having an annular shape along the tire circumferential direction. The reinforcing ring portion (80) is provided outside the tire radial direction of a carcass (40), and an elastic modulus of the reinforcing ring portion (80) of the central region (Ct) in the tire width direction is higher than an elastic modulus of the reinforcing ring portion (80) in either position of the shoulder regions (Sh) in the tire width direction.

## Description

### [Technical Field]

The present invention relates to a run-flat tire of a side reinforcing rubber type.

### [Background Art]

In a run-flat tire provided with a side reinforcing rubber having a crescent sectional shape, a structure provided with a tread reinforcing layer made of a resin is known in order to suppress buckling during run flat traveling (see Patent Literature 1).

The tread reinforcing layer is provided inside the tire radial direction of a carcass so as to be continuous with the side reinforcing rubber.

### [Citation List]

### [Patent Literature]

[PTL1] Japanese Unexamined Patent Application Publication No. 2010-264956

### [Summary of Invention]

However, the run-flat tire having the tread reinforcing layer has the following problems.

Specifically, Patent Literature 1 discloses a configuration in which the side reinforcing rubber (run-flat reinforcing layer) is formed of rubber and a configuration in which a thermoplastic elastomer composition is formed.

Since the tread reinforcing layer is positioned on the inner surface side of a tread portion, a force in a direction in which the tread reinforcing layer is pushed into the inner surface side of the tire at the time of buckling is generated, and a force in a direction in which a joint portion between the run-flat reinforcing layer and the tread reinforcing layer is separated is applied.

In the case where the run-flat reinforcing layer is made of rubber, it is necessary to widen a joint surface so as to resist the force in the separating direction of the joint portion, and as a result, the end portion of the tread reinforcing layer having no influence on the buckling must be made thick, which may cause an increase in weight.

On the other hand, when the run-flat reinforcing layer is formed of a thermoplastic elastomer composition, the run-flat reinforcing layer is softened by heat generation during run-flat traveling, and it becomes difficult to obtain a sufficient longitudinal spring necessary for run-flat traveling, and there is a possibility that run-flat durability is lowered.

Accordingly, an object of the present invention is to provide a run-flat tire that is more durable during run-flat traveling and lightweight while suppressing buckling.

One aspect of the present invention is a run-flat tire including a tread portion in contact with a road surface, a tire side portion continuous to the tread portion and positioned inside in a tire radial direction of the tread portion, a carcass forming a tire skeleton, and a side reinforcing rubber provided in the tire side portion, wherein the fun-flat tire comprises a reinforcing ring portion formed of a resin material and having a predetermined width in a tire width direction and having an annular shape along a tire circumferential direction. The reinforcing ring portion is provided outside the tire radial direction of the carcass, and an elastic modulus of the reinforcing ring portion in a central region in tire width direction higher than an elastic modulus of the reinforcing ring portion in either position of shoulder regions in tire width direction.

### [Brief Description of Drawings]

FIG. 1 is a cross-sectional view of a run-flat tire 10 along the tire width direction and the tire radial direction.
FIG. 2 is a partially enlarged cross-sectional view of the run-flat tire 10.
FIG. 3 is a schematic perspective view of the reinforcing ring portion 80.
FIG. 4 is a partially enlarged cross-sectional view of a run-flat tire 10 A.
FIG. 5 is a partially enlarged cross-sectional view of a run-flat tire 10 B.
FIG. 6 is a partially enlarged cross-sectional view of a run-flat tire 10 C.
FIG. 7 is a partially enlarged cross-sectional view of a run-flat tire 10 D.
FIG. 8 is a partially enlarged cross-sectional view of a run-flat tire 10 E.

### [Description of Embodiments]

Embodiments will be described below with reference to the drawings. The same functions and configurations are denoted by the same or similar reference numerals, and descriptions thereof are omitted as appropriate.

### (1) Overall structure of tire

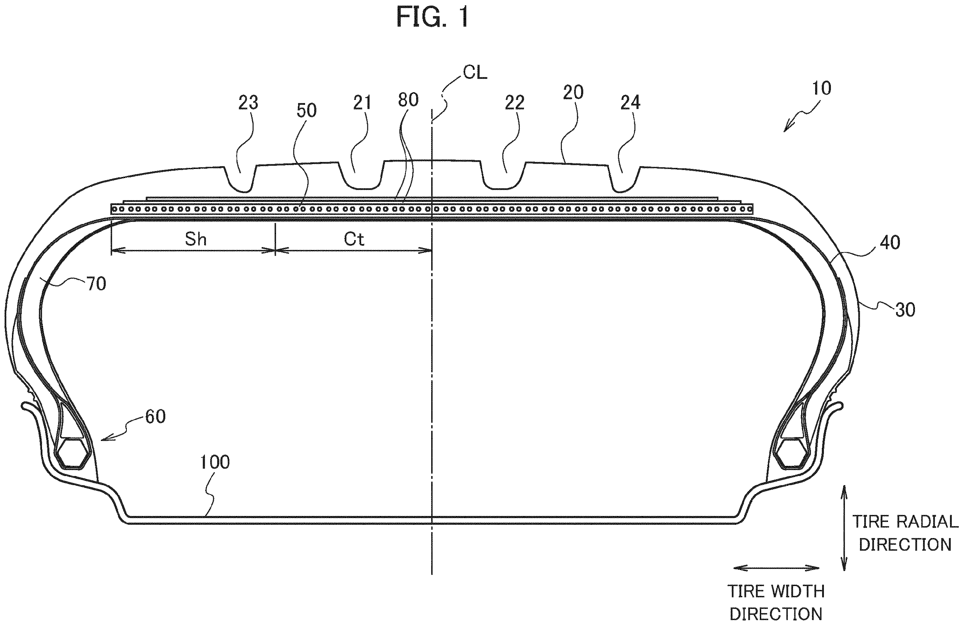

FIG. 1 is a cross-sectional view of the run-flat tire 10 according to the present embodiment. Specifically, FIG. 1 is a cross-sectional view of the run-flat tire 10 along the tire width direction and the tire radial direction. In FIG. 1, the sectional hatching is not shown (hereinafter the same).

The run-flat tire 10 is capable of running (run flat running) at a constant speed for a certain distance (80 km at 80 km/h) even when the internal pressure (air pressure) is significantly reduced due to a puncture or the like (e.g., 0 kPa).

As shown in FIG. 1, the run-flat tire 10 includes a tread portion 20, a tire side portion 30, a carcass 40, a belt layer 50, a bead portion 60, a side reinforcing rubber 70, and a reinforcing ring portion 80.

The tread portion 20 is a part in contact with a road surface (not shown). On the tread portion 20, a pattern (not shown) corresponding to the use environment of the run-flat tire 10 and the type of vehicle to be mounted is formed.

In this embodiment, four circumferential grooves extending to the tire circumferential direction, specifically, a circumferential groove 21, a circumferential groove 22, a circumferential groove 23, and a circumferential groove 24 are formed on the tread portion 20.

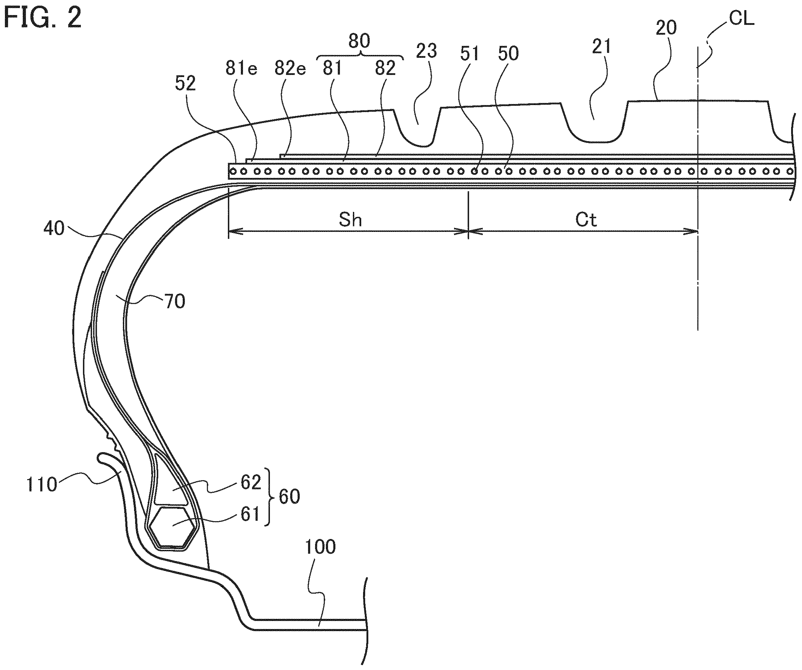

The circumferential groove 21 and the circumferential groove 22 are formed in a central region Ct in the tire width direction. The central region Ct includes the position of a tire equatorial line CL. In this embodiment, the central region Ct is in a half range from the tire equatorial line CL to an end portion 52 (not shown in FIG. 1, see FIG. 2) of the belt layer 50 in the tire width direction.

The circumferential groove 23 and the circumferential groove 24 are formed in a shoulder region Sh in the tire width direction. In the present embodiment, the shoulder region Sh is defined as a range from the tire width direction outside end of the central region Ct to the end portion 52 (not shown in FIG. 1, see FIG. 2) of the belt layer 50 in the tire width direction.

The tire side portion 30 continues to the tread portion 20 and is positioned inside in the tire radial direction of the tread portion 20. The tire side portion 30 is a region from the tire width direction outside end of the tread portion 20 to the upper end of the bead portion 60. The tire side portion 30 is sometimes referred to as a side wall or the like.

The carcass 40 forms a skeleton (tire skeleton) of the run-flat tire 10. The carcass 40 has a radial structure in which a carcass cord (not shown) arranged radially along a tire radial direction is covered with a rubber material. However, the present invention is not limited to a radial structure, and a bias structure in which the carcass cords are arranged so as to cross each other in the tire radial direction.

The carcass cord is not particularly limited, and may be formed of an organic fiber cord in the same manner as a tire for a standard passenger car (including minivans and SUV (Sport Utility Vehicles)).

The belt layer 50 is provided inside the tire radial direction of the tread portion 20. The belt layer 50 has a belt cord 51 (not shown in FIG. 1, see FIG. 2), and the belt cord 51 is a single-layer spiral belt covered with a resin material.

Specifically, the belt cord 51 is disposed along the tire circumferential direction. More specifically, the belt cord 51 covered with a resin material is spirally wound along the tire circumferential direction to form the belt layer 50. The belt cord 51 may be wound in units of one or a plurality of belt cords.

As the resin for covering the belt cord 51, a resin material having a higher tensile elastic modulus than the tensile elastic modulus of the rubber material constituting the tire side portion 30 and the rubber material constituting the tread portion 20 are used. As the resin for covering the belt cord 51, a thermoplastic resin having elasticity, a thermoplastic elastomer (TPE), a thermosetting resin or the like can be used. It is desirable to use a thermoplastic elastomer in consideration of elasticity in running and moldability in manufacturing.

The thermoplastic elastomer includes a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), a dynamically crosslinked thermoplastic elastomer (TPV), and the like.

Examples of the thermoplastic resin include polyurethane resin, polyolefin resin, vinyl chloride resin, polyamide resin, and the like. Further, as the thermoplastic resin material, for example, a material having a deflection temperature under load (At 0.45 MPa Load) specified in ISO 75 -2 or ASTM D648 of 78 ° C or more, a tensile yield strength specified in JIS K7113 of 10 MPa or more, a tensile fracture elongation specified in JIS K7113 of 50% or more, and a Vicat softening temperature (method A) specified in JIS K7206 of 130 ° C or more can be used.

The bead portion 60 continues to tire side portion 30 and is positioned inside in tire radial direction of tire side portion 30. The bead portion 60 is an annular shape extending to the tire circumferential direction.

The bead portion 60 is locked to a flange portion 110 (not shown in FIG. 1, see FIG. 2) formed at the radially outside end of the rim wheel 100.

The side reinforcing rubber 70 is provided in the tire side portion 30. The side reinforcing rubber 70 has a crescent shape in cross section, and supports a load of a vehicle (not shown) to which the run-flat tire 10 is mounted when the internal pressure of the run-flat tire 10 greatly decreases.

The side reinforcing rubber 70 may be formed of one or more kinds of rubber materials, or may contain other materials (short fiber, resin, etc.) if the rubber material is a main component.

The reinforcing ring portion 80 is formed annularly along the tire circumferential direction. The reinforcing ring portion 80 has a predetermined width in tire width direction. In the present embodiment, the reinforcing ring portion 80 is provided over substantially all of the region of the belt layer 50 which is narrower than the tread portion 20 contacting the road surface.

The reinforcing ring portion 80 is formed of a resin material. The reinforcing ring portion 80 can be formed by using the same resin material as the resin material for covering the belt cord 51.

However, the reinforcing ring portion 80 may not be formed of the same resin material as the resin material covering the belt cord 51. That is, as long as the above-described resin material can be used for the belt layer 50, the resin materials used for the belt layer 50 and the reinforcing ring portion 80 may be different.

### (2) Structure of the reinforcing ring portion

Next, structure examples of the reinforcing ring portion will be described. Specifically, with reference to FIGs. 2 to 8, structure examples 1 ∼ 6 of the reinforcing ring portion will be described.

### (2.1) Structure example 1

FIG. 2 is a partially enlarged sectional view of the run-flat tire 10. Specifically, FIG. 2 is a partially enlarged cross-sectional view of the run-flat tire 10 taken along the tire width direction and the tire radial direction.

As shown in FIG. 2, the belt layer 50 is provided outside the carcass 40 of the tire radial direction. The reinforcing ring portion 80 is provided outside the belt layer 50 of the tire radial direction. That is, the reinforcing ring portion 80 is provided on the outside of the tire radial direction of the carcass 40 and on the outside of the belt layer of the tire radial direction 50.

The elastic modulus of the reinforcing ring portion 80 of the central region Ct is higher than the elastic modulus of the reinforcing ring portion 80 at either position of the shoulder region in the tire width direction. That is, the reinforcing ring portion 80 of the central region Ct is highly elastic, and the reinforcing ring portion 80 of the shoulder region is less elastic than the central region Ct.

In this structure example, the reinforcing ring portion 80 is configured by a plurality of reinforcing rings. Specifically, the reinforcing ring portion 80 has a reinforcing ring 81 and a reinforcing ring 82.

The reinforcing ring 81 in contact with the belt layer 50 and is provided outside the tire radial direction of the belt layer 50. The reinforcing ring 82 is in contact with the reinforcing ring 81 and is provided outside the tire radial direction of the reinforcing ring 81. Note that the belt layer 50, the reinforcing ring 81, and the reinforcing ring 82 formed of a resin material may be realistically formed as a single body, or may be recognized as a single body after manufacturing the run-flat tire 10.

An end portion 81 e of the tire width direction of the reinforcing ring 81 is positioned in a shoulder region Sh. An end portion 82 e of the tire width direction of the reinforcing ring 81 is also positioned in the shoulder region Sh.

The end portion 82 e is positioned inside the tire width direction than the end portion 81 e. That is, the width of the reinforcing ring 82 along the tire width direction is narrower than the width of the reinforcing ring 81 along the tire width direction.

That is, the width in the tire width direction become narrower from the inside of the tire radial direction toward the outside of the tire radial direction in the order of the belt layer 50, the reinforcing ring 81, and the reinforcing ring 82.

Therefore, the thickness of the reinforcing ring portion 80 along the tire radial direction in the central region Ct is thicker than the thickness of the reinforcing ring portion 80 along the tire radial direction in either position of the shoulder regions Sh.

Specifically, in the shoulder region Sh, at a position where only the reinforcing ring 81 is provided and the reinforcing ring 82 is not provided (between the end portion 81 e and the end portion 82 e), the thickness is thinner than that of the central region Ct.

In other words, the number of layers (2) of the reinforcing rings in the central region Ct is larger than the number of layers (1) at either position (between the end portions 81 e and 82 e) of the shoulder region Sh.

From the viewpoint of preventing failure of the reinforcing ring portion 80, the end portions 81 e and 82 e are preferably positioned inside in the tire width direction rather than an end portion 52 in the tire width direction of the belt layer 50.

The bead portion 60 has a bead core 61 and a bead filler 62. In this structure example, the bead core 61 has a popular configuration and is formed by twisting a plurality of metal cords formed of steel or the like.

The bead filler 62 is a reinforcing member filled in a gap between the carcasses 40 folded back via the bead core 61, and is formed by using a rubber member harder than other parts.

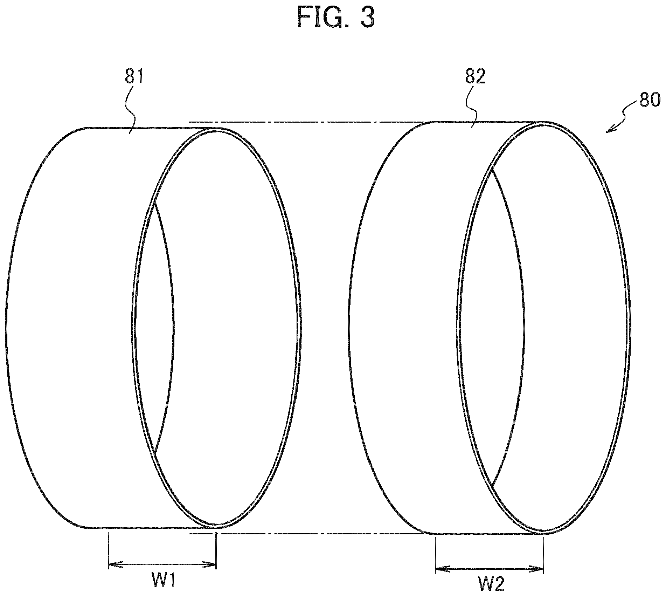

FIG. 3 is a schematic perspective view of the reinforcing ring portion 80. As shown in FIG. 3, the reinforcing rings 81 and 82 constituting the reinforcing ring portion 80 are annular along the tire circumferential direction like other members such as the bead core 61. That is, the reinforcing ring 81 and the reinforcing ring 82 are sheet-like members formed in an annular shape.

The reinforcing ring 81 (reinforcing ring 82) may be formed as a whole of the reinforcing ring 81 (reinforcing ring 82) by injection molding or may be formed by welding parts of the reinforcing ring 81 (reinforcing ring 82) which are suitably divided.

The width W1 of the reinforcing ring 81 is wider than the width W2 of the reinforcing ring 82.

In the above-described structure example 1, the reinforcing ring 81 provided inside the tire radial direction is wider than the reinforcing ring 82 provided outside the tire radial direction, but the reinforcing ring 82 may be wider than the reinforcing ring 81.

The belt layer 50 and the reinforcing ring portion 80 have a part overlapping an upper end portion of the side reinforcing rubber 70 in the tire width direction, but the reinforcing ring portion 80, or the belt layer 50 and the reinforcing ring portion 80 may not overlap an upper end portion of the side reinforcing rubber 70 in the tire width direction. That is, the end portion 52 of the belt layer 50 and an end portion 80 e of the reinforcing ring portion 80 may be positioned inside the tire width direction than the upper end of the side reinforcing rubber 70.

Further, although the circumferential grooves 21 ∼ 24 are formed in the structure example 1, any or all of the circumferential grooves may not be formed.

### (2.2) Structure example 2

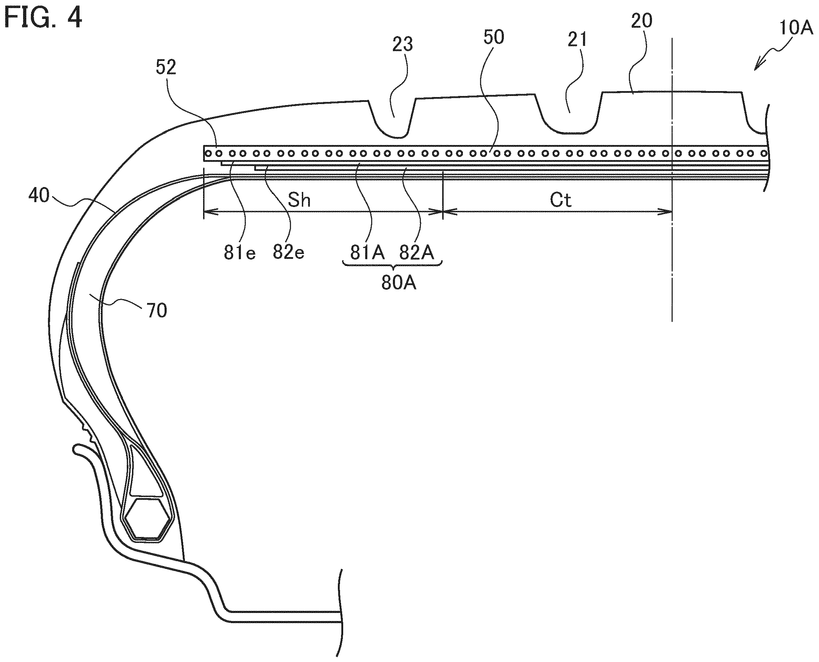

FIG. 4 is a partially enlarged sectional view of the run-flat tire 10 A. Hereinafter, the different parts from the structure example 1 will be mainly described.

As shown in FIG. 4, the run-flat tire 10 A includes a reinforcing ring portion 80 A. Specifically, the reinforcing ring portion 80 A is provided between the carcass 40 and the belt layer 50.

The reinforcing ring portion 80 A has a reinforcing ring 81 A and a reinforcing ring 82 A. The reinforcing ring 81 A contacts with the belt layer 50 and is provided inside the tire radial direction of the belt layer 50. The reinforcing ring 82 A is provided inside the tire radial direction of the reinforcing ring 81 A in contact with the reinforcing ring 81 A.

Similarly to the structure example 1, the end portion 82 e is positioned inside the tire width direction than the end portion 81 e. That is, the width of the reinforcing ring 82 A along the tire width direction is narrower than the width of the reinforcing ring 81 A along the tire width direction.

Therefore, as compared with the run-flat tire 10 (structure example 1), the number of layers of the reinforcing rings is the same, but the positions provided in the tire radial direction are different. Further, in the present structure example, the width in the tire width direction become narrower from the inside of the tire radial direction toward the outside of the tire radial direction in the order of the belt layer 50, the reinforcing ring 81 A, and the reinforcing ring 82 A.

### (2.3) Structure example 3

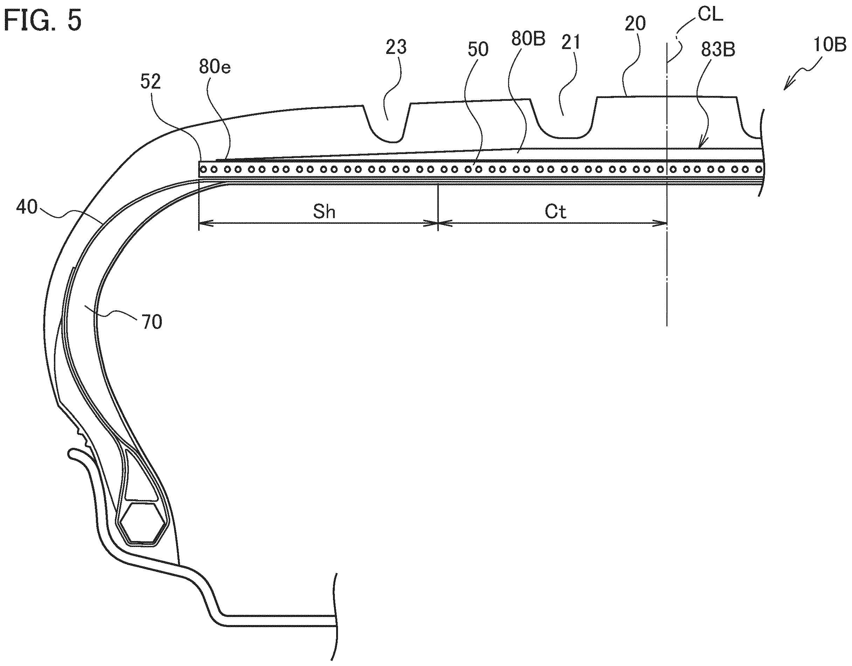

FIG. 5 is a partially enlarged sectional view of the run-flat tire 10 B. As shown in FIG. 5, the run-flat tire 10 B includes a reinforcing ring portion 80 B. Specifically, the reinforcing ring portion 80 B is provided outside the belt layer 50 of the tire radial direction.

The thickness of the reinforcing ring portion 80 B along the tire radial direction is different depending on the position of the tire width direction. Specifically, the thickness of the reinforcing ring portion 80 B along the tire radial direction increases from the shoulder region Sh toward the center region Ct.

More specifically, the thickness of the reinforcing ring portion 80 B along the tire radial direction increases from outside end portion 80 e in the tire width direction of the reinforcing ring portion 80 B toward the tire equatorial line CL. Therefore, the reinforcing ring portion 80 B has a raised portion 83 B slightly raised than the other portion of the reinforcing ring portion 80 B in the central region Ct. In this configuration, raised portion 83 B has a constant width in the tire width direction. That is, the cross-sectional shape of the reinforcing ring portion 80 B gradually increases in thickness toward the inner side of the tire width direction, and has a raised portion 83 B having a predetermined width and the thickest thickness along the tire radial direction.

The reinforcing ring portion 80 B may be formed so as to gradually increase in thickness from the end portion 80 e to the position of the tire equatorial line CL, and so as to maximize only the position of the tire equatorial line CL.

### (2.4) Structure example 4

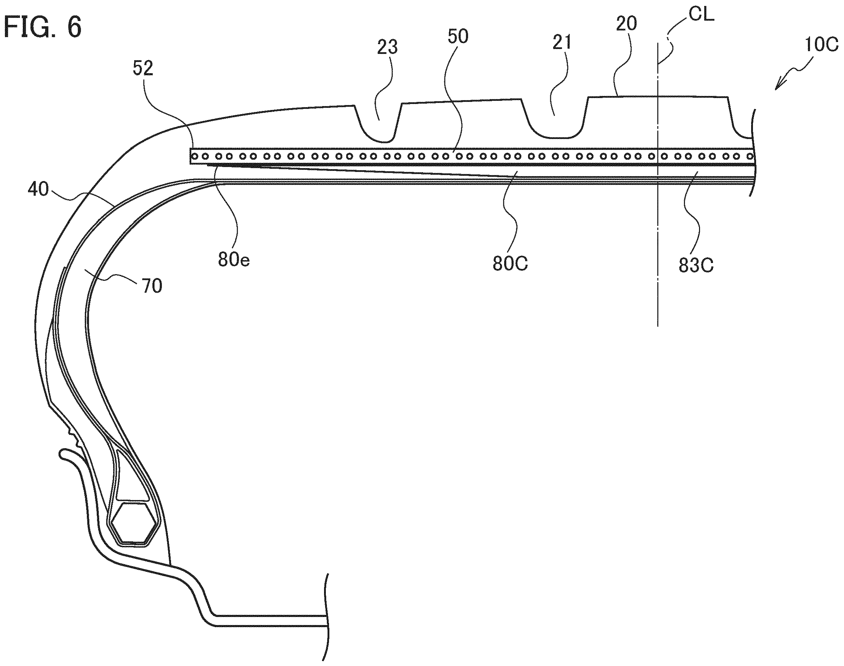

FIG. 6 is a partially enlarged sectional view of the run-flat tire 10 C. As shown in FIG. 6, the run-flat tire 10 C includes a reinforcing ring portion 80 C. Specifically, the reinforcing ring portion 80 C is provided inside the belt layer 50 of the tire radial direction.

The reinforcing ring portion 80 C, like the reinforcing ring portion 80 B of the structure example 3, has a different thickness along the tire width direction depending on the position of the tire radial direction. Specifically, the thickness of the reinforcing ring portion 80 C along the tire radial direction increases from the shoulder region Sh toward the center region Ct.

More specifically, the thickness of the reinforcing ring portion 80 C along the tire radial direction increases from the outside end portion 80 e in the tire width direction of the reinforcing ring portion 80 C toward the tire equatorial line CL. Therefore, the reinforcing ring portion 80 C has a raised portion 83 C which is slightly raised than other portions of the reinforcing ring portion 80 C in the central region Ct.

In this configuration, the raised portion 83 C, like raised portion 83 B, has a constant width in the tire width direction.

### (2.5) Structure example 5

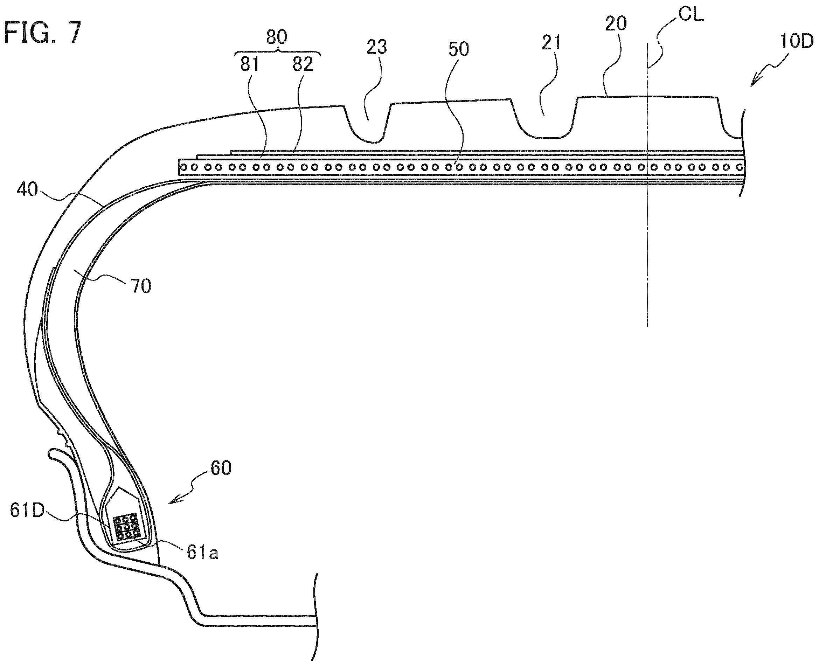

FIG. 7 is a partially enlarged sectional view of the run-flat tire 10 D. As shown in FIG. 7, the run-flat tire 10 D includes a reinforcing ring portion 80 in the same manner as the structure example 1 (see FIG. 2).

On the other hand, the bead portion 60 of the run-flat tire 10 D has a configuration different from the structure example 1. Specifically, the bead portion 60 of the run-flat tire 10 D has a bead core 61 D including a bead cord 61 a.

The bead cord 61 a is formed of a metal material (for example, steel.). In this structure example, the bead cord 61 a is provided in a configuration of 3 × 3 (tire radial direction × tire width direction). The bead cords 61 a is not particularly twisted, and the bead cords 61 a formed by bundling one or more (for example, three along tire width direction.) are wound a plurality of times along the tire circumferential direction.

The bead core 61 D is formed of a resin material and covers the bead cord 61 a. The bead core 61 D can be formed of the same resin material as that used for the belt layer 50.

In this configuration, the bead core 61 D has a tapered portion that tapers outward in the tire radial direction, and the portion can also function as a beat filler.

### (2.6) Structure example 6

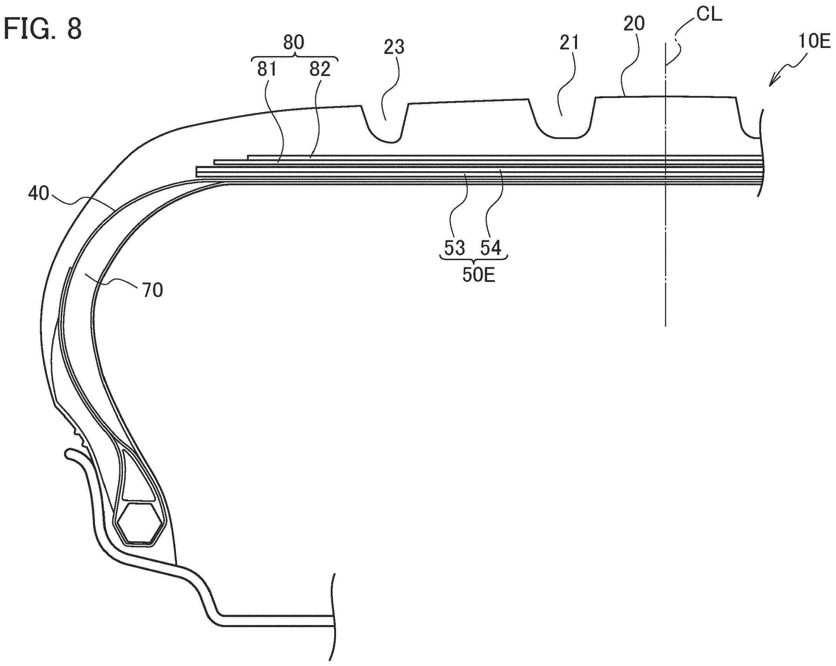

FIG. 8 is a partially enlarged sectional view of the run-flat tire 10 E. As shown in FIG. 8, the run-flat tire 10 E includes a reinforcing ring portion 80 in the same manner as the structure example 1 (see FIG. 2).

On the other hand, a belt layer 50 E of the run-flat tire 10 E is a crossing belt covered with rubber unlike the constitution example 1 ∼ 5.

Specifically, the belt layer 50 E has a crossing belt 53 and a crossing belt 54. The crossing belt 53 is provided outside the tire radial direction of the carcass 40. The crossing belt 54 is provided outside the tire radial direction of the crossing belt 53.

The crossing belt 53 and the crossing belt 54 have belt cords (not shown) crossing each other.

### (3)Function and effects

According to the embodiment described above, the following effects can be obtained. Specifically, as shown in the structure example 1 ∼ 6, the run-flat tire 10, 10 A to 10 E according to the present embodiment, the reinforcing ring portions 80, 80 A to 80 C are provided outside the tire radial direction of the carcass 40.

The elastic modulus of the reinforcing ring portion of the central region Ct is higher than the elastic modulus of the reinforcing ring portion at either position of the shoulder region Sh.

Since the reinforcing ring portion is provided outside the tire radial direction of the carcass 40, compared with a tread reinforcing layer and the like described in a prior art document, a situation where a joint portion of the side reinforcing rubber 70 (run-flat reinforcing layer) and the tread reinforcing layer is separated cannot occur, and therefore, it is not necessary to make an end portion of the reinforcing ring portion thick and the weight can be reduced.

Further, since the reinforcing ring portion is provided outside the tire radial direction of the carcass 40, there is a certain distance from the side reinforcing rubber 70 provided in the tire side portion 30, and it is difficult to soften the reinforcing ring portion even if the side reinforcing rubber 70 generates heat compared with the tire or the like described in the prior art document. In addition, since the elastic modulus of the central region Ct which is most likely to occur bucking during run-flat traveling is high, the buckling can be effectively suppressed.

That is, the run-flat tires 10, 10 A to 10 E can further enhance durability during run-flat traveling and reduce weight while suppressing buckling.

Further, the distance capable of run-flat traveling can be extended by suppressing the buckling. Alternatively, by reducing the gauge of the side reinforcing rubber 70 instead of extending the run-flat traveling distance, the weight reduction, the reduction of rolling resistance, and the riding comfort improvement by the reduction of the longitudinal spring of the run-flat tire can be achieved.

In the run-flat tires 10, 10 A to 10 E, the thickness of the reinforcing ring portion along the tire radial direction in the central region Ct is larger than the thickness of the reinforcing ring portion along the tire radial direction in the shoulder region Sh.

Therefore, the buckling of the central region Ct can be more effectively suppressed. Since the thickness of the end portion of the reinforcing ring portion positioned in the shoulder region Sh is thinner than the central region Ct, the buckling can be effectively suppressed while suppressing weight increase.

In the run-flat tires 10 B, 10 C, the thickness of the reinforcing ring portion along the tire radial direction increases from the shoulder region Sh toward the center region Ct. Therefore, the buckling of the central region Ct can be more effectively suppressed. Since the thickness of the reinforcing ring portion along the tire radial direction increases from the shoulder region Sh toward the central region Ct, the buckling can be effectively suppressed while suppressing weight increase.

In the run-flat tires 10, 10 A, 10 D and 10 E, the number of layers of reinforcing rings in the central region Ct is larger than the number of layers in any position of the shoulder region Sh. Therefore, the weight increase can be suppressed while further effectively suppressing the buckling of the central region Ct.

In the run-flat tires 10 A, 10 C, the reinforcing ring portion is provided between a carcass 40 and a belt layer 50. On the other hand, in the run-flat tires 10, 10 B, 10 D, 10 E, the reinforcing ring portion is provided outside the belt layer 50 of the tire radial direction. Therefore, the buckling can be effectively suppressed by tensile deformation or compression deformation of the reinforcing ring portion.

In run-flat tires 10, 10 A to 10 E, the belt layer 50 has the belt cord 51 coated with a resin material. For this reason, it has a high affinity with the reinforcing ring portion similarly formed of a resin material, and can effectively suppress the buckling together with the belt layer 50.

### (4) Other embodiments

Although the contents of the present invention have been described above with reference to the examples, it will be obvious to those skilled in the art that the present invention is not limited to these descriptions and that various modifications and improvements are possible.

For example, in the above-described structure example 1 and the like, the belt layer 50 and the reinforcing ring portion 80 have a portion overlapping the upper end portion of the side reinforcing rubber 70 in the tire width direction, but the reinforcing ring portion 80, or the belt layer 50 and the reinforcing ring portion 80 may not overlap the upper end portion of the side reinforcing rubber 70 in the tire width direction. That is, the end portion 52 of the belt layer 50 and the end portion 80 e of the reinforcing ring portion 80 may be positioned inside the tire width direction than the upper end of the side reinforcing rubber 70.

Although the circumferential grooves 21 ∼ 24 are formed in the above-described structure example 1 and the like, any or all of the circumferential grooves may not be formed. Further, in the portion where the circumferential groove is formed, the thickness of the reinforcing ring portion may be made thicker than in other portions (portions where the circumferential groove is not formed) because the buckling is more likely to occur.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

- 10, 10 A to 10 E: Run-flat tire
- 20: Tread portion
- 21 ∼ 24: Circumferential groove
- 30: Tire side portion
- 40: Carcass
- 50 , 50 E: Belt layer
- 51: Belt cord
- 52: End portion
- 53, 54: Crossing belt
- 60: Bead portion
- 61, 61 D: Bead core
- 61 a: Bead cord
- 62: Bead filler
- 70: Side reinforcing rubber
- 80, 80 A ∼ 80 C: Reinforcing ring portion
- 80 e: End portion
- 81, 81 A: Reinforcing ring
- 81 e: End portion
- 82, 82 A: Reinforcing ring
- 82 e: End portion
- 83 B, 83 C: Raised portion
- 100: Rim wheel
- 110: Flange portion
- Ct: Central region
- Sh: Shoulder region

## Claims

1. A run-flat tire comprising:
a tread portion in contact with a road surface;
a tire side portion continuous to the tread portion and positioned inside in a tire radial direction of the tread portion;
a carcass forming a tire skeleton; and
a side reinforcing rubber provided in the tire side portion, wherein the fun-flat tire comprises a reinforcing ring portion formed of a resin material and having a predetermined width in a tire width direction and having an annular shape along a tire circumferential direction, wherein
the reinforcing ring portion is provided outside the tire radial direction of the carcass, and
an elastic modulus of the reinforcing ring portion in a central region in tire width direction higher than an elastic modulus of the reinforcing ring portion in either position of shoulder regions in tire width direction.

2. The run-flat tire according to claim 1, wherein a thickness of the reinforcing ring portion along the tire radial direction in the central region is greater than a thickness of the reinforcing ring portion along the tire radial direction in either position of the shoulder regions in tire width direction.

3. The run-flat tire according to claim 2, wherein a thickness of the reinforcing ring portion along the tire radial direction is increased from the shoulder region toward the center region.

4. The run-flat tire according to claim 1, wherein the reinforcing ring portion is composed of a plurality of reinforcing rings, and
the number of layers of the reinforcing ring in the central region is greater than the number of layers in either position of the shoulder regions.

5. The run-flat tire according to any one of claims 1 to 4, comprising a belt layer provided inside the tire radial direction of the tread portion, wherein
the reinforcing ring portion is provided between the carcass and the belt layer.

6. The run-flat tire according to any one of claims 1 to 4, comprising a belt layer provided inside the tire radial direction of the tread portion, wherein the reinforcing ring portion is provided outside the belt layer of the tire radial direction.

7. The run-flat tire of claim 5 or 6, wherein the belt layer has a belt cord disposed along the tire circumferential direction, and
wherein the belt cord is covered with a resin material.
